# FASCICULE DE BREVET EUROPEEN

(11) **EP 1 752 234 B1**
(45) Date de publication et mention de la délivrance du brevet: **20.02.2008**
(21) Numéro de dépôt: 06118820.7
(22) Date de dépôt: 11.08.2006
(51) Int. Cl.: B21D 53/78, F01D 5/28, B24C 1/10, C21D 7/06

(54) **Pièce métallique traitée par mise en compression de sous couches et procédé pour obtenir une telle pièce**
Metallteil behandelt durch Komprimierung seiner unteren Schichten sowie Verfahren zum Herstellen eines solchen Metallteils
Metallic workpiece treated by compressing its underlayers and method for manufacturing such a workpiece

(30) Priorité: 12.08.2005 FR 0552508
(43) Date de publication de la demande: 14.02.2007
(73) Titulaire: SNECMA, 75015 Paris (FR)
(72) Inventeur: Vigneau, Joël, 91750 Champcueil (FR)
(74) Mandataire: David, Daniel

(56) Documents cités:
- EP-A- 0 794 264
- EP-A- 1 208 942
- US-A- 5 531 570
- US-A- 5 846 057
- US-A1- 2002 124 402

## Description

La présente invention concerne une pièce métallique selon le préambule de la revendication 1. Elle concerne le domaine du traitement de pièces métalliques par mise en compression de couches sous jacentes à la surface des pièces et en particulier le domaine des turbomachines aéronautiques, pour lesquelles on met en oeuvre une telle technique pour améliorer la durée de vie des pièces soumises à de fortes contraintes tant mécaniques que thermiques. On traite ainsi en particulier les aubes, les disques de rotor ou les disques aubagés monoblocs. L'invention concerne aussi un procédé de traitement pour obtenir une pièce métallique selon l'invention, selon le préambule de la revendication 12.

On connaît plusieurs techniques de mise en compression des couches internes de pièces métalliques. La mise en compression de celles-ci consiste, selon une première technique classique, en un martelage à la grenaille sphérique, qui a pour but de créer des contraintes résiduelles en surface et dans les sous couches des pièces métalliques. Cette contrainte de compression vise à retarder l'apparition de criques ou refermer les amorces de fissuration existantes. Il s'ensuit une amélioration de leur tenue mécanique. On utilise des billes en un matériau dur tel que le verre, une céramique ou bien l'acier que l'on projette à grande vitesse sur la surface des pièces à traiter. La projection est faite dans une machine à turbine ou bien par entraînement dans un flux gazeux, l'air, au moyen d'une buse par exemple. Le gaz est soumis à une détente et les billes sont introduites dans le flux créé par la détente.

Sous l'action du martelage des billes, la surface, ayant dépassé la limite d'élasticité se déforme, créant une couche sous-jacente de métal en compression Ces contraintes de compression améliorent ainsi la résistance à la fatigue, la résistance à la corrosion et le coefficient de frottement. Le choc des billes crée des contraintes de compression dans le métal jusqu'à une certaine profondeur.

Selon cette technique, les profondeurs en compression vont jusqu'à 150 µm, avec des contraintes de compression de l'ordre de 400 à 500 MPa en surface et 500 à 600 MPa à des profondeurs de l'ordre de 50µm.

Une autre technique de grenaillage de précontrainte mettant en oeuvre des ultrasons (ci-après appelé grenaillage US) est décrite dans les demandes de brevet EP 1 208 942(base pour les préambules des revendications 1 et 12) ou EP 1 207 013 au nom de la demanderesse, et consiste à mettre des billes en mouvement sous la forme d'un brouillard de billes créé, dans une enceinte étanche renfermant la pièce à traiter, par la surface active d'une sonotrode excitée par des moyens de production d'oscillation ultrasonores. Selon cette technique, les profondeurs mises en compression vont jusqu'à 300-400 µm avec des contraintes de compression résiduelle de l'ordre de 500 à 600 MPa en surface et 700 à 900 MPa à des profondeurs de 50 à 100 µm. Globalement, le grenaillage ultrasons induit des contraintes de compression sensiblement plus intenses et à des profondeurs plus importantes que le grenaillage par jets de gaz.

Dans la présente, on désigne par le terme "grenaillage", un grenaillage par chocs mécaniques, le terme grenaillage couvrant le grenaillage à l'aide de billes mises en mouvement soit par projection sous jet de gaz soit par vibrations ultrasonores, ou encore le galetage.

Selon une autre technique différente du grenaillage, la mise en compression est effectuée par chocs laser ; on peut traiter des profondeurs plus importantes avec des niveaux de compression plus élevés. Les profondeurs en compression sont de l'ordre de 0,5 à 1,5 mm, mais peuvent atteindre plusieurs millimètres, avec des contraintes de compression résiduelle de l'ordre de 350 à 1000 MPa. Globalement, le traitement par chocs laser induit des contraintes de compression résiduelle sur des profondeurs deux à trois fois plus élevées que le grenaillage US par exemple, avec des niveaux de contraintes comparables. Ce procédé par chocs laser est de mise en oeuvre relativement lourde. L'application du laser nécessite le recouvrement des surfaces à traiter par un revêtement ablatif, peinture ou ruban adhésif, dont l'ablation par pulvérisation sous l'effet du faisceau laser produit l'onde de choc à l'origine de la mise en compression du matériau traité. Cette onde est confinée par un matériau recouvrant le revêtement ablatif et transparent au faisceau laser. Il s'agit généralement d'un rideau d'eau. Le laser doit être capable de délivrer une densité de puissance de l'ordre de 10 GW/cm² avec des durées d'impulsion de l'ordre de dix à trente nanosecondes (10 ns à 30 ns) et une fréquence de tir comprise entre moins d'un Hertz et quelques Hertz.

Les impacts de chocs laser ont une forme ronde, carrée, en ellipse ou autre éventuellement, couvrant une surface de l'ordre d'une dizaine de millimètres carrés (notamment de 10 à 20 mm²). Les impacts sont répétés trois ou quatre fois en chaque point pour traiter toute la plage de profondeurs et atteindre graduellement les niveaux de contrainte les plus élevés escomptés. Cependant à chaque impact du laser, le revêtement est pulvérisé sur la surface du spot laser (voire un peu au-delà), il est donc nécessaire de renouveler le revêtement ablatif à chaque tir.

En outre, on ne peut pas balayer en une seule séquence toute la surface à traiter avec des spots laser, et cela d'autant moins que le revêtement est détruit par l'impact laser au-delà de la surface du spot. Ainsi, selon l'art antérieur, le traitement d'une surface donnée nécessite une série de trois ou quatre balayages. Le traitement d'une surface donnée est effectué par recouvrement partiel des impacts pour ne pas laisser des surfaces entre impacts qui ne seraient pas traitées. On traite la surface en effectuant un balayage par rangées de spots espacés et en réitérant plusieurs fois le balayage avec un léger décalage des rangées de spots pour atteindre tous les points de la surface.

Cela implique également un renouvellement du revêtement à chaque fois. Il s'ensuit que pour le traitement d'une surface donnée, on est amené à renouveler le revêtement jusqu'à douze fois (voir par exemple le procédé décrit dans EP 0 794 264). La mise en oeuvre de cette technique est donc longue et complexe et par conséquent coûteuse. On préfère donc limiter l'étendue des zones à traiter.

Dans le cas d'une aube, ce dernier traitement est appliqué dans les zones situées en bordure de la pale, telles que le bord d'attaque ou de fuite. Celles-ci sont les plus exposées aux dommages engendrés par des impacts de particules ayant une forte action érosive ou de corps étrangers pouvant provoquer une déformation locale, une déchirure ou des criques. Cependant, d'autres parties de la pale ne sont pas exemptes de dommages. On constate par exemple la présence de zones rayées sur la surface intrados.

Pour les raisons évoquées ci-dessus, il ne serait pas avantageux économiquement de traiter une surface étendue de la pale par chocs laser.

L'invention a donc pour objectif une pièce et une aube en particulier, dont toutes les parties de surface susceptibles d'être endommagées plus ou moins fortement, notamment par des corps étrangers et agents d'érosion, soient traitées par mise en compression des sous-couches de surface mais dont la fabrication reste d'un coût acceptable.

On constate par ailleurs que les zones traitées par un martelage aussi intense que les chocs laser induisent localement des tensions (contraintes de traction) à leur périphérie, qui équilibrent l'ensemble des contraintes. Il serait donc souhaitable de pouvoir réduire les effets de ces contraintes de tension en évitant des forts gradients de tension et en éloignant les zones en tension des zones sensibles.

On parvient à ces objectifs conformément à l'invention avec une pièce métallique selon la revendication 1.

La mise en compression de la seconde couche peut aussi avoir pour effet d'augmenter l'intensité des contraintes de compression résiduelle dans la première couche, si ces contraintes sont obtenues par grenaillage classique et sont de l'ordre de 300 à 500 MPa. Dans le cas du grenaillage préalable par ultrasons, ces contraintes sont de l'ordre de 700 à 800 MPa, et ne sont pas ou peu augmentées par le choc laser

Dans le cas d'une aube de turbomachine ladite zone s'étend avantageusement le long du bord d'attaque, du bord de fuite et/ou du sommet de la pale. Sont concernées en particulier les aubes pleines de compresseur telles que les aubes de soufflantes dans les turboréacteurs à soufflante. L'invention ne se limite toutefois pas aux aubes de turbomachines, elle s'applique aussi aux rotors, notamment aux disques de rotor et plus particulièrement aux disques aubagés monoblocs.

La solution de l'invention résulte de l'observation selon laquelle le traitement de compression par grenaillage, à ultrasons en particulier, peut fournir des niveaux de contraintes résiduelles comparables à celles obtenues par les chocs laser bien que celles-ci ne soient créées que sur une profondeur moindre. En combinant la mise en compression par grenaillage moins onéreux avec la mise en compression par chocs laser, on réalise un produit qui est globalement plus économique du point de vue de sa fabrication.

La pièce de préférence dispose d'une deuxième zone différente de ladite première zone qui est mise en compression par grenaillage seulement. Plus particulièrement, le grenaillage est un grenaillage de type Ultrasons.

L'invention porte également sur un procédé de traitement pour obtenir une pièce métallique selon l'invention tel que défini dans la revendication 12..

En particulier, on traite dans une première étape, ladite première zone ensemble avec une deuxième zone différente de la première par grenaillage, puis dans une deuxième étape on traite la première zone seulement par chocs laser.

De préférence les deux zones sont adjacentes, créant ainsi un gradient progressif de contraintes résiduelles. Contrairement aux pièces qui comprennent des zones traitées par chocs laser bordées par des zones adjacentes non mises en compression, on ne crée pas de portions limitrophes soumises à un brusque saut de contraintes et susceptibles de voir apparaître des criques. Par ailleurs, on évite l'apparition de déformations dans des pièces telles que les aubes minces engendrées par ces changements brutaux de contraintes.

La réduction du recouvrement des impacts laser présente également un avantage quant aux déformations engendrées par le traitement par chocs laser. En effet, on a constaté que le niveau des distorsions causées dans une aube de compresseur par exemple est d'autant plus élevé que le recouvrement des impacts est important. Cela est rapporté par exemple dans le brevet US 5 531 570. La réduction du niveau de recouvrement favorisée par l'invention est donc bénéfique également sur ce plan.

La présente demande vise à couvrir également un disque de rotor de turbomachine, en particulier un disque aubage, monobloc comportant des aubes selon l'invention. Elle couvre aussi une turbomachine comportant des aubes selon l'invention et en particulier un turboréacteur pourvu d'aubes de compresseur selon l'invention.

D'autres caractéristiques et avantages sont rapportés dans la description qui suit d'un mode de réalisation de l'invention, en annexe de laquelle sont joints les dessins avec les figures suivantes :
La figure 1 est une représentation schématique d'une aube de turbomachine ;
La figure 2 est une vue en coupe selon la direction AA de l'aube de la figure 1 montrant la surface traitée par grenaillage ;
La figure 3 est une vue d'une aube montrant des zones traitées par grenaillage et par chocs laser, conformément à l'invention ;
La figure 4 est une vue en coupe selon la direction BB de l'aube de la figure 3 montrant les couches sous jacentes à la surface mises en compression par grenaillage et par chocs laser, conformément à l'invention;
La figure 5 est une illustration de la mise en compression par chocs laser ;
La figure 6 montre une séquence de balayage des impacts du faisceau laser lors du traitement.

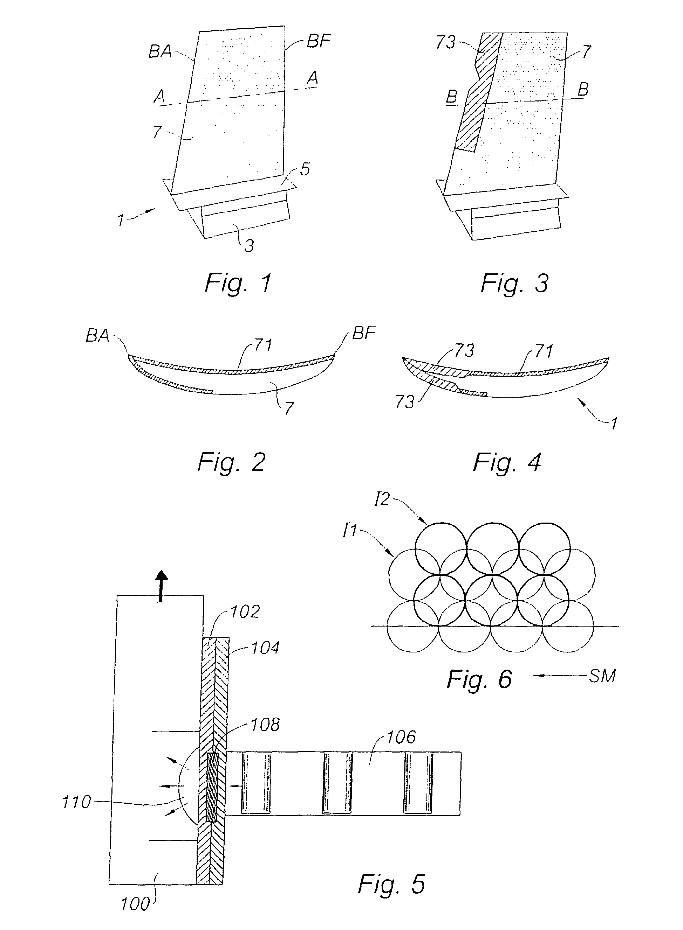

Comme on le voit sur la figure 1, une aube 1 comprend un pied 3 une plateforme 5 et une pale 7. L'aube est montée par le pied 3 à la périphérie d'un disque de rotor dans un logement approprié. La plateforme assure la continuité du conduit annulaire dans lequel est guidé le flux gazeux. La pale 7 de forme aérodynamique est balayée par le flux gazeux. C'est cette partie de l'aube qui est soumise aux sollicitations extérieures et qui ont un effet sur la durée de vie. Les bords d'attaque BA et de fuite BF sont éventuellement soumis à des chocs violents tels que des corps étrangers ingérés par le moteur et percutant les aubes de soufflante. Ces impacts peuvent avoir un effet en profondeur dans les zones de bordure de la pale. D'autres impacts tels que ceux de particules érosives sont plus superficiels mais se retrouvent dans des zones plus étendues sur la pale sous la forme de rayures et d'abrasions. Les contraintes résiduelles générées par le martelage contribuent à limiter les dommages, les propagations de criques et à augmenter la tenue en fatigue. Elles visent à maintenir la durée de vie de la pièce.

Conformément à l'invention, la pièce est d'abord traitée par un grenaillage, sur une surface étendue correspondant au moins en partie mais de préférence à l'ensemble des zones susceptible d'être endommagées. Ce traitement est avantageusement un grenaillage par ultrasons. On a représenté schématiquement la zone 71 traitée par cette technique. Elle s'étend sur l'intrados de la pale entre le bord d'attaque BA et le bord de fuite BF. Elle s'étend en partie sur l'extrados de la pale en aval du bord d'attaque BA. L'épaisseur de la couche mise en compression est d'environ 0,3 mm sous la surface, plus généralement de l'ordre de 0,2 mm. Le niveau de contraintes résiduelles atteint à cette profondeur est de l'ordre de 400 à 500 MPa.

Pour parvenir à ce résultat on décrit ci-après un exemple de mise en oeuvre du grenaillage US sur un alliage de titane TA6V. Des billes en acier 100C6 de diamètre 1.5 mm sont mises en mouvement par une sonotrode vibrant en fréquence ultra sonore avec une amplitude de 85 microns. Le taux de recouvrement visé est de 400 %, la durée du traitement de 52 s. Les contraintes de compression obtenues atteignent jusqu'à 700 MPa et s'étendent sur une profondeur de 250 à 300 microns.

On procède ensuite au traitement par chocs laser dans les zones qui sont soumises aux plus fortes sollicitations que sont BA et BF notamment mais aussi le sommet éventuellement. Ici cette zone 73 est limitée à la région du bord d'attaque BA sur une distance déterminée en aval.

On rappelle ci-après, en relation avec la figure 5 le principe de cette technique.

La pièce à traiter 100 est revêtue d'une couche dite ablative 102 et le faisceau laser pulsé 104 est appliqué sur la pièce à travers une couche de confinement 106.

Les différentes étapes du procédé sont les suivantes :
1) Préparation de la couche ablative 102 par application d'une peinture ou d'un ruban adhésif. Eventuellement l'ablation peut se faire directement sur la surface métallique.
2) Mise en place de la couche de confinement 104 qui est par exemple un rideau d'eau ou une plaque de verre.
3) Tirs par laser 106. Les impacts ont une forme de disque rond, elliptique ou autre, de surface de l'ordre de 10 mm². Les impacts sont proches les uns des autres mais sans recouvrement de façon à toujours correspondre à une zone vierge de la couche ablative. La pièce et la tête de focalisation laser sont animées d'un déplacement relatif.
4) Enlèvement des parties de la couche ablative non vaporisées ; nettoyage de la surface.
5) Application d'une nouvelle couche ablative.
6) Reprise du cycle au point 2).

La couche ablative est vaporisée 108 par le rayon laser et confinée par la couche de confinement. Il s'ensuit la formation d'une onde de choc 110 qui se propage dans le matériau métallique le mettant ainsi en compression.

Ces opérations forment une séquence qui doit être répétée 10 à 12 fois dans le procédé de l'art antérieur de martelage par chocs laser pour couvrir la surface concernée avec le nombre voulu de recouvrement des impacts.

On réduit le nombre d'opérations conformément à l'invention en traitant par chocs laser une zone préalablement traitée par grenaillage, notamment grenaillage US. Ce grenaillage préalable est pratiqué de telle sorte que les contraintes de compression résiduelles soient de l'ordre de 500 à 700 MPa à une profondeur de 0,2 - 0,3 mm sous la surface de la pièce.

On a représenté sur la figure 6 un exemple de répartition des impacts sur la pièce. Les premiers impacts I1 sont des disques tangents ; le deuxième passage d'impacts I2 est constitué de disques également tangents avec un décalage d'un rayon à la fois transversalement et longitudinalement par rapport au sens marche SM.

Le traitement de l'invention nécessite moins d'impacts laser puisque les zones traitées comportent déjà une couche présentant des contraintes de compression résiduelle de même intensité que celles produites par les chocs laser. Le niveau des contraintes de compression entre deux impacts voisins n'étant pas nul, leur parfait recouvrement n'est pas nécessaire. Il s'ensuit un nombre réduit de passages ainsi que des renouvellements de revêtement. Le temps de traitement peut être réduit de 40 à 50%.

Le traitement de mise en compression est suivi le cas échéant d'une opération de polissage par tribofinition ou par abrasion, notamment au moyen d'une bande abrasive ou d'une pâte abrasive. On note que dans ce cas l'application d'un revêtement n'est pas nécessaire, l'ablation étant réalisée sur la surface métallique directement.

Le traitement s'applique sur des pièces neuves mais convient aussi aux aubes réparées par rechargement de matière.

## Revendications

1. Pièce métallique comportant au moins une première zone (73) traitée par mise en compression de couches sous la surface de celle-ci, au moins une première couche étant mise en compression par grenaillage, **caractérisée par le fait qu**'elle comporte une deuxième couche sous-jacente plus profonde mise en compression par chocs laser.

2. Pièce selon la revendication 1 dont une deuxième zone (71) différente de ladite première zone est mise en compression par grenaillage seulement.

3. Pièce selon la revendication précédente dont les deux zones (71,73) sont adjacentes.

4. Pièces selon l'une des revendications précédentes dont le grenaillage est de type à ultrasons.

5. Pièce selon la revendication 1 dont la couche mise en compression par grenaillage a une épaisseur de 0,2 à 0,3 mm.

6. Pièce selon la revendication précédente dont les contraintes résiduelles de la première couche sont comprises entre 500 et 700 MPa.

7. Aube de turbomachine (1) formant une pièce selon l'une des revendications 1 à 6, dont ladite première zone (73) s'étend au moins en partie le long du bord d'attaque (BA), de son bord de fuite (BF) et/ou de son sommet.

8. Disque de rotor de turbomachine comportant des aubes (1) selon la revendication 7.

9. Disque de rotor selon la revendication 8, **caractérisé en ce qu**'il est un disque aubagé monobloc.

10. Compresseur comportant des aubes (1) selon la revendication 7.

11. Turbomachine comportant des aubes (1) selon la revendication 7.

12. Procédé de traitement pour obtenir une pièce métallique selon l'une des revendications 1 à 6, comprenant une première étape de traitement de la dite première zone (73) par grenaillage **caractérisé par le fait que** ladite première étape de traitment est suivie d'un traitement de ladite zone (73) par chocs laser.

13. Procédé selon la revendication précédente selon lequel, on traite ensemble ladite première zone (73) et une deuxième zone (71) différente de la première par grenaillage, puis on traite la première zone (73) seulement par chocs laser.

## Claims

1. A metal component comprising at least a first zone (73) treated by putting layers beneath the surface thereof in compression, at least a first layer being put in compression by shot peening, wherein said zone comprises a deeper subjacent second layer put in compression by laser shock peening.

2. The component as claimed in claim 1, a second zone (71) of which, different than said first zone, is put in compression by only shot peening.

3. The component as claimed in the preceding claim, the two zones (71, 73) of which are adjacent.

4. The component as claimed in one of the preceding claims, the shot peening of which is of the ultrasonic type.

5. The component as claimed in claim 1, the layer of which that is put in compression by shot peening has a thickness of 0.2 to 0.3 mm.

6. The component as claimed in the preceding claim, the residual stresses of the first layer of which are between 500 and 700 MPa.

7. A turbomachine blade (1) forming a component as claimed in one of claims 1 to 6, said first zone (73) of which extends at least partially along the leading edge (LE), its trailing edge (TE) and/or its tip.

8. A turbomachine rotor disk comprising blades (1) as claimed in claim 7.

9. A rotor disk as claimed in claim 8, which is a one-piece bladed disk or blisk.

10. A compressor comprising blades (1) as claimed in claim 7.

11. A turbomachine comprising blades (1) as claimed in claim 7.

12. A method of treating a metal component as claimed in one of claims 1 to 6, comprising a first treatment step in said first zone (73) by shot peening, wherein said first treatment step is followed by a treatment of said zone (73) by laser shock peening.

13. The method as claimed in the preceding claim, in which both said first zone (73) and a second zone (71) different than the first are treated by shot peening, and then only the first zone (73) is treated by laser shock peening.

## Patentansprüche

1. Metallteil, das mindestens einen ersten Bereich (73) aufweist, der durch Komprimierung von Schichten unterhalb von dessen Oberfläche bearbeitet ist, wobei mindestens eine erste Schicht durch Strahlbehandlung komprimiert wird,
**dadurch gekennzeichnet,**
**dass** es eine zweite, tiefere, unterhalb angrenzende Schicht aufweist, die durch Laserwellenstöße komprimiert ist.

2. Metallteil nach Anspruch 1, bei dem ein zweiter Bereich (71), der sich von dem genannten ersten Bereich unterscheidet, allein durch Strahlbehandlung komprimiert ist.

3. Metallteil nach dem vorherigen Anspruch, bei dem die beiden Bereiche (71, 73) aneinander grenzen.

4. Metallteil nach einem der vorherigen Ansprüche, bei dem die Strahlbehandlung mit Ultraschall erfolgt.

5. Metallteil nach Anspruch 1, bei dem die durch Strahlbehandlung komprimierte Schicht eine Stärke von 0,2 bis 0,3 mm hat.

6. Metallteil nach dem vorherigen Anspruch, bei dem die Restbelastungen der ersten Schicht zwischen 500 und 700 Mpa betragen.

7. Turbomaschinenschaufel (1), die ein Teil nach einem der Ansprüche 1 bis 6 bildet, bei dem der genannte erste Bereich (73) sich zumindest teilweise längs der Vorderkante (BA), seiner Hinterkante (BF) und/oder seiner Spitze erstreckt.

8. Rotorscheibe einer Turbomaschine die Schaufeln (1) nach Anspruch 7 aufweist.

9. Rotorscheibe nach Anspruch 8,
**dadurch gekennzeichnet,**
**dass** sie eine in einem Stück gefertigte beschaufelte Scheibe ist.

10. Verdichter, der Schaufeln (1) nach Anspruch 7 aufweist.

11. Turbomaschine, die Schaufeln (1) nach Anspruch 7 aufweist.

12. Bearbeitungsverfahren, um ein Metallteil nach einem der Ansprüche 1 bis 6 zu erhalten, welches einen ersten Verfahrensschritt zur Bearbeitung des genannten ersten Bereichs (73) durch Strahlbehandlung umfasst,
**dadurch gekennzeichnet,**
**dass** auf diesen ersten Bearbeitungsschritt eine Bearbeitung dieses Bereichs (73) durch Laserwellenstöße folgt.

13. Verfahren nach dem vorherigen Anspruch, nach dem der genannte erste Bereich (73) und ein von dem ersten unterschiedener zweiter Bereich (71) durch Strahlbehandlung bearbeitet werden und dann der erste Bereich (73) allein durch Laserwellenstöße bearbeitet wird.
